# EUROPÄISCHE PATENTSCHRIFT

(11) **EP 0 369 367 B1**
(45) Veröffentlichungstag und Bekanntmachung des Hinweises auf die Patenterteilung: **08.03.1995**
(21) Anmeldenummer: 89120985.0
(22) Anmeldetag: 11.11.1989
(51) Int. Cl.: B23K 9/09

(54) **Einrichtung und Verfahren zum Kurzschluss-Lichtbogenschweissen**
Device and process for short circuit arc welding
Dispositif et procédé de soudage à l'arc avec court-circuits

(30) Priorität: 14.11.1988 US 270766
(43) Veröffentlichungstag der Anmeldung: 23.05.1990
(73) Patentinhaber: THE LINCOLN ELECTRIC COMPANY, Cleveland, Ohio 44117 (US)
(72) Erfinder: Parks, John M., Salon, Ohio 44139 (US); Stava, Elliott K., Brecksville, Ohio 44121 (US)
(74) Vertreter: Vollbach, Hans, Dipl.-Ing.

(56) Entgegenhaltungen:
- EP-A- 0 324 960
- GB-A- 1 453 901
- GB-A- 2 021 816
- US-A- 4 546 234

## Beschreibung

Die Erfindung betrifft eine Einrichtung zum Kurzschluß-Lichtbogenschweißen, mit einer einzelnen Gleichstromversorgungseinrichtung, die einen Schweißstrom mit veränderlicher Stromstärke über einen Schweißdraht und ein Schmelzbad an einem Werkstück leitet, wobei der Schweißdraht mit veränderlichem Abstand von einem Halter vorragt und einer Folge von Schweißzyklen unterworfen ist, von denen jeder eine Lichtbogenphase umfaßt, während der die dem Schweißdraht zugeführte Energie das Drahtende zu einer Schmelzmetallkugel aufschmilzt, und eine Kurzschlußphase umfaßt, in der die Schmelzmetallkugel in Kontakt mit dem Schmelzbad gelangt und dann zum Tropfenübergang eingeschnürt und abgetrennt wird, worauf der Lichtbogen für den nächsten Schweißzyklus gezündet wird. Die Erfindung ist weiter auf ein Verfahren zum Kurzschluß-Lichtbogenschweißen unter Verwendung einer einzelnen Gleichstromversorgungseinrichtung gerichtet, die einen Schweißstrom mit veränderlicher Stromstärke in den Schweißkreis eines mit veränderbarem Elektrodenvorstand an einem Halter angeordneten Schweißdraht und eines Schweißbades am Werkstück liefert, wobei der Schweißstrom von einer Lichtbogenspannung abhängt und der Schweißdraht einer Folge von Schweißzyklen unterworfen ist, die eine Lichtbogenphase umfassen, in der die dem Schweißdraht zugeführte Energie das Schweißdrahtende zu einer Schmelzmetallkugel aufschmilzt, und die eine Kurzschlußphase umfassen, bei der die Schmelzmetallkugel in Kontakt mit dem Schweißbad gelangt und abgetrennt wird.

In neuerer Zeit hat man erhebliche Anstrengungen darauf verwendet, das Kurzschluß-Lichtbogenschweißen durch Steuerung des Schweißstromes oder der Lichtbogenspannung während der verschiedenen Phasen der Schweißzyklen zu verbessern, die jeweils eine Kurzschlußphase und eine sich hieran anschließende Lichtbogenphase umfassen.

Während der Kurzschlußphase kommt das zu einer Metallkugel aufgeschmolzene Ende des sich vorschiebenden Schweißdrahtes in Kontakt mit dem Schweißmetallbad des Werkstücks, so daß der sich verbrauchende Schweißdraht mit seinem zu der Metallkugel aufgeschmolzenen Schweißdrahtende von einem hohen Strom durchflossen wird. Die Kurzschlußphase endet mit der elektrischen Pinch -Wirkung, bei der das aufgeschmolzene Schweißdrahtende elektrisch eingeschnürt und dann beim Tropfenübergang explosionsartig vom Schweißdraht abgelöst wird. Diesen Vorgang bezeichnet man häufig als Abschmelzvorgang oder Tropfenübergang.

Die Steuerung des Stromflusses während der Kurzschlußphase des Schweißzyklus erfolgt über einen Steuerkreis der Schweißstromquelle. Im allgemeinen wird ein Überwachungskreis vorgesehen, so daß bei einem vorgegebenen Anstieg der dV/dt-Signale der bevorstehende Abschmelzvorgang bzw. der Tropfenübergang festgestellt wird. Der Schweißstrom kann dann unmittelbar vor Ablösen des Tropfens vom Schweißdraht auf einen Grundstrom I_{B} oder einen niedrigeren Wert abgesenkt werden. Auf diese Weise wird bei jedem Schweißzyklus die Abschmelzenergie bzw. die Energie für den Tropfenübergang erheblich herabgesetzt, wodurch die Schweißspritzerbildung am Ende der Kurzschlußphase herabgesetzt wird. Derartige Steueranordnungen zur Steuerung des Stromflusses während der Kurzschlußphase oder über den Verlauf des Schweißzyklus werden häufig als Spritzerkontrollkreise bezeichnet, da die Tropfenabschmelzung der Kurzschlußphase die Hauptursache für die Spritzerbildung darstellt.

Es ist bekannt, mit kurzer Zeitverzögerung nach der Tropfenabschmelzung einen Hochenergieimpuls zu erzeugen, der die Lichtbogenphase nach der Tropfenabschmelzung einleitet. Dieser hohe Stromimpuls kann als Plasma-Zusatz oder Verstärkungsimpuls (Plasma Boost Pulse) bezeichnet werden. Mit einem solchen, energiereichen Plasma-Zusatzstromimpuls unmittelbar mit dem Einleiten der Lichtbogenphase des Schweißzyklus ergibt sich ein rasches Aufschmelzen des sich in Richtung auf das Schweißbad bewegenden Schweißdrahtendes durch die Anoden- bzw. Lichtbogenwärme. Das rasche Aufschmelzen führt zur Ausbildung eines schmelzflüssigen Metallkügelchens am Ende des Schweißdrahtes, das dann mit dem sich gegen das Werkstück vorschiebenden Schweißdraht zum Schweißbad hin bewegt wird. Nach dem Plasma-Zusatzstromimpuls fließt ein Grundstrom I_{b} über den Lichtbogen, der das Schmelzkügelchen im Schmelzzustand hält. Durch Steuerung des Stroms und bei fest eingestellter Dauer des Plasma-Zusatzstromimpulses läßt sich dessen Energie einstellen.

Bei diesen bekannten Schweißkonzepten wird das Schweißbad aus der Bewegungsrichtung des kugelförmig aufgeschmolzenen Schweißdrahtendes aufgrund des hohen Stromflusses während des Plasma-Zusatzimpulses abgeleitet bzw. verdrängt, wodurch es zu Kontakten zwischen Schweißbad und Schweißdraht an einer Stelle kommen kann, die im Abstand von der Lichtbogenmitte liegt. Dadurch wird die Spritzerwirkung verstärkt und es entsteht ein Wellen- oder Schwingeffekt mit kurzzeitigen Kurzschlüssen. Um diesen Nachteil zu vermeiden, hat man die Verwendung eines spannungsveränderlichen Leistungssteuerkreises in Erwägung gezogen, um während des Plasma-Zusatzstromimpulses den Strom konstant zu halten. Dabei kommt es jedoch zu häufigen Störkurzschlüssen in der Lichtbogenphase, wobei jeder Kurzschluß aber nur eine geringe Energiemenge freisetzt. Insgesamt ergibt sich daher, daß bei konstantem Strom oder konstanter Spannung während des Plasma-Zusatzimpulses entweder die Häufigkeit der kurzzeitigen Kurzschlüsse oder aber deren Stärke in der Lichtbogenphase erhöht wird.

Wird mit einem zeitlich unveränderlichen Plasma-Zusatzimpuls gearbeitet, so wird dem zur Kugelform aufgeschmolzenen Schweißdrahtende eine unterschiedliche Energiemenge zugeführt, wenn sich das freie Ende der abschmelzenden Elektrode bzw. des abschmelzenden Schweißdrahtes verändert. Die früheren Systeme, die mit fester Impulsdauer für den Plasma-Zusatzstromimpuls arbeiten, lassen sich daher für das automatische Schweißen einsetzen. Beim halbautomatischen Kurzschluß-Lichtbogenschweißen besteht jedoch das Problem, daß sich der Vorstand des Schweißelektrodendrahts von dem Drahthalter verändert, wenn der Schweißer den Halter nicht absolut ruhig und in gleichbleibendem Abstand zum Werkstück führt, da sich mit wechselndem Drahtvorstand auch der Spannungsabfall im Schweißdraht und damit die Lichtbogenspannung verändert. Außerdem ist auch der Schweißstrom beim halbautomatischen Kurzschluß-Lichtbogenschweißen nicht konstant, da sich der Abstand zwischen Elektrodendrahtspitze und Werkstück ändert, wenn der Schweißer den Halter nicht exakt hält.

Aus der US-PS 4 546 234 ist ein Verfahren zum Steuern einer Stromquelle für das Kurzschluß-Lichtbogenschweißen bekannt, bei dem die Stromstärke des Schweißstroms während eines Schweißzyklus so gesteuert wird, daß dem Schweißdraht unabhängig von der jeweiligen Lichtbogenlänge ein konstanter Schweißstrom zugeführt wird. Dieses wie auch andere bekannte Verfahren zum Lichtbogenschweißen haben den Nachteil, daß lediglich die Stromstärke des Schweißstroms wähend der einzelnen Schweißzyklen gesteuert wird. Beim halbautomatischen Schweißen kann es daher dazu kommen, daß dem freien Ende der Elektrode nicht genügend Energie zugeführt wird, um zu einer Schmelzmetallkugel mit bestimmter Größe aufschmelzen zu können. Andererseits ist es auch möglich, daß dem Drahtende zuviel Energie während einer Lichtbogenphase zugeführt wird, so daß zuviel Draht aufgeschmolzen wird. Hierdurch kommt es zu Schwankungen der Schweißzyklusdauer und zu einem ungleichmäßigen Abschmelzen der Elektrode, wodurch es schwierig ist, eine gleichmäßige Schweißraupe von Hand zu schweißen. Ein weiterer Nachteil dieser Schwankungen besteht darin, daß es zu unkontrollierten Kurzschlüssen zwischen Schweißdraht und Werkstück kommen kann, was zu einer unerwünschten Spritzerbildung führt, wie dies bereits weiter oben beschrieben ist.

Aufgabe der Erfindung ist es, das Kurzschluß-Lichtbogenschweißen dahingehend zu verbessern, daß auch bei sich änderndem Elektrodenvorstand vom Elektrodenhalter mit zeitkonstanten Schweißzyklen gearbeitet werden kann, wobei während jedes Schweißzyklus eine gleiche Menge Schweißmaterial aufgeschmolzen und in das Schweißbad am Werkstück überführt werden kann, wodurch unkontrollierte Kurzschlüsse zwischen Elektrodendraht und Schweißbad vermieden werden können.

Diese Aufgabe wird mit der Erfindung durch die in den Ansprüchen angegebenen Merkmale gelöst, wobei in den Unteransprüchen vorteilhafte Ausgestaltungsmerkmale angegeben sind. Nach der Erfindung wird dem Schweißdraht während der Lichtbogenphase eines jeden Schweißzyklus die gleiche Energiemenge zugeführt, die zum Aufschmelzen einer vorher festgelegten Drahtmenge erforderlich ist. Dabei wird die zugeführte Energie teils in Widerstandserwärmung des vorstehenden Elektrodendrahts und teils in Lichtbogenerhitzung umgesetzt. Wenn der Elektrodendraht nur ein kurzes Stück von dem Halter vorragt, ist seine Widerstandserwärmung (I²R) gering und entsprechend mehr Wärme wird dem vorderen Drahtende durch den Lichtbogen zugeführt. Ist der Elektrodenvorstand größer, verringert sich zwar die dem Draht durch den Lichtbogen zugeführte Energie; er ist jedoch durch die Widerstandserwärmung während der vorhergehenden Schweißzyklen an seinem vorderen Drahtende schon soweit vorgeheizt, daß die Energie im Lichtbogen ausreicht, das vorher festgelegte Metallvolumen aufzuschmelzen.

Da mit Schweißzyklen zwischen 30 und 100 je Sek. gearbeitet wird, vollzieht sich eine Änderung im Elektrodenvorstand mit einer deutlich niedrigeren Geschwindigkeit als die Wärmezunahme, die sich an den einzelnen Längenabschnitten des sich vorschiebenden Schweißdrahtes während eines jeden Schweißzyklus einstellt. Da der Schweißvorgang sich wesentlich schneller vollzieht als etwaige Änderungen des Elektrodenvorstandes, stellt sich an jedem Längenabschnitt des Schweißdrahtes eine Energie ein, die in Kombination mit der durch die Anodenerwärmung bewirkten Energie an jedem das Schweißdrahtende bildenden Längenabschnitt gleich ist, so daß das Schweißdrahtende in jedem Schweißzyklus zu einer Schmelzmetallkugel mit gleichmäßiger Größe aufgeschmolzen wird, wobei zugleich der Spritzerauswurf vermindert wird. Damit sind die Voraussetzungen für das halbautomatische Schweißen gegeben.

In bevorzugter Ausgestaltung wird die Energie dem Schweißdraht während eines Stromimpulses zugeführt, der aus einem ersten Plasma-Zusatzimpulsteil mit gegenüber dem Schweißgrundstrom hoher Stromstärke und einem daran anschließenden Plasma-Stromimpulsteil besteht, der ebenfalls ein hohes Stromniveau hat, das jedoch niedriger liegt als die Stromstärke während des Plasma-Zusatzimpulsteils. Die hohe Stromstärke des Plasma-Zusatzimpulsteils erleichtert das Zünden des Lichtbogens nach Beendigung der vorgehenden Kurzschlußphase. Die etwas geringere Stromstärke während des anschließenden Plasma-Stromimpulsteils ermöglicht eine genauere Einstellung der während des Stromimpulses zugeführten Energie, als dies mit der hohen Stromstärke des Plasma-Zusatzimpulsteils möglich wäre.

Der Plasma-Stromimpulsteil ist in seiner Zeitdauer veränderlich und wird dann beendet, wenn die dem Schweißdraht zugeführte Energie einen vorher festgelegten Energiewert erreicht. Hierzu dient bevorzugt eine Energie-Summiervorrichtung, die aus dem Produkt von momentanem Schweißstrom und der Lichtbogenspannung laufend ein Wattsignal erzeugt und in einer Integriervorrichtung integriert. Das von der Integriervorrichtung erzeugte Signal gibt die dem Schweißdraht während des Stromimpulses zugeführte Energie an. Wenn dieses Signal dem vorher festgelegten Energiewert entspricht, wird der Stromimpuls von einer Zeitdauerbegrenzungsvorrichtung beendet.

Besonders zweckmäßig ist es, wenn eine Grundstromsteuerung vorgesehen ist, die einen Grundstrom niedrigen Niveaus zwischen Draht und Werkstück nach Beendigung des Stromimpulses bis zur nächsten Kurzschlußphase bereitstellt. Diese Ausgestaltung hat den Vorteil, daß der niedrige Grundstrom das zu der Kugelform aufgeschmolzene Schweißdrahtende nach Beendigung des Plasma-Stromimpulses lediglich in seiner Schmelzform und in seiner Temperatur hält und dem Schweißdrahtende keine zusätzliche Energie zum weiteren Aufschmelzen zuführt.

Die erfindungsgemäße Stromversorgungseinrichtung zur Steuerung des Stromflusses während des Schweißzyklus verwendet bevorzugt einen Hochfrequenz-Impulsstromkreis, z.B. einen Impulslängenmodulator, der mit hoher Frequenz, die insbesondere über 1o KHz und vorzugsweise im Bereich von 20 KHz liegt von einem Gleichstrom-Chopper (Zerhacker) betrieben wird. Hiermit läßt sich der Schweißzyklus in allen seinen Phasen steuern und während eines jeden Schweißzyklus laufend ändern, ohne daß sich beim Ausgleich von sich einstellenden Änderungen des Elektrodenvorstandes nennenswerte Verzögerungen ergeben. Da die Leistungssteuerungsvorrichtung eine hohe Arbeitsfrequenz von 10 bis 20 KHz hat, stellt sich im normalen Schweißbetrieb an dem das Schweißdrahtende bildenden letzten Längenabschnitt stets dieselbe Schmelzenergie ein, unabhängig davon, wie groß die Anzahl der den Elektrodenvorstand bildenden Längenabschnitte ist.

Nach dem erfindungsgemäßen Verfahren, bei dem die vorstehend beschriebene Einrichtung zum Einsatz kommen kann, wird der Schweißdraht während der Lichtbogenphase eines jeden Schweißzyklus mit einer vorgewählten Energie beaufschlagt, die den zum Aufschmelzen des Schweißdrahtendes erforderlichen Energiewert übersteigt. Anschließend fließt dann der im Stromniveau niedrige Grundstrom zwischen Schweißdraht und Werkstück, bis die nächstfolgende Kurzschlußphase einsetzt. In bevorzugter Ausgestaltung des erfindungsgemäßen Verfahrens wird die Energie durch ein Wattsignal bestimmt, das sich aus dem jeweiligen augenblicklichen Produkt aus Lichtbogenspannung und Schweißstrom ergibt, wobei das Wattsignal integriert und der Integrationswert summiert wird, bis die vorgegebene konstante Energie erreicht ist.

Der Strom während des Plasma-Zusatzstromimpulses wird vorzugsweise so gewählt, daß er einen Plasmaschirm an der Spitze der Elektrode bzw. des Schweißdrahtes bildet. Hiermit wird ein großer, sich quer zur Schweißrichtung erstreckender Plasmastrom bewirkt, der einen breiten Bereich des Bleches auf den Flächenschmelzzustand bringt. Das aufgeschmolzene Schweißmetall bindet sich metallogisch mit dem Blech und verteilt sich über den weiten Bereich ohne Kaltschweißen. Anschließend wird dann der Strom auf die Plasmaphase des Schweißzyklus gesenkt, um einen im wesentlichen konischen Lichtbogen zu erzeugen.

Die Energieabschaltung bzw. die Energieabschneidung kann mit Hilfe eines Differentialsignals bewirkt werden, um die Länge bzw. die Breite des Plasmateils des Stromimpulses zu ändern.

Wie sich aus der bisherigen Beschreibung ergibt, wird mit der Erfindung beim Kurzschluß-Lichtbogenschweißen während der Lichtbogenphase eines jeden Schweißzyklus die dem Schweißdraht zugeführte Gesamtenergie eingestellt, wobei zahlreiche Vorrichtungen, Systeme und/oder Verfahren zur Schweißspritzerkontrolle zur Anwendung kommen können, derart, daß veränderliche freie Elektrodenlängen bzw. Elektrodenvorstände kompensiert werden, wie sie beim halbautomatischen Schweißen auftreten. Mit der Erfindung wird die vorzeitige Einleitung des Kurzschlußzustandes verhindert, so daß die im wesentlichen konstanten Schweißbedingungen in jedem Schweißzyklus gewährleistet sind.

Die Erfindung ist im übrigen in den einzelnen Ansprüchen angegeben, auf die hier Bezug genommen wird.

Weitere Merkmale und Vorteile der Erfindung ergeben sich aus der nachfolgenden Beschreibung des in der Zeichnung gezeigten Ausführungsbeispiels. Es zeigt:
- Fig. 1: ein bevorzugtes Ausführungsbeispiel der Erfindung in einem kombinierten Blockdiagramm und schematisch angegebenem Schaltkreis;
- Fig. 2: in einem Schaubild mehrere Diagramme zusammen mit einer Tabelle zur Erläuterung der Einrichtung nach Fig. 1;
- Fig. 3: in einem Schaltbild Einzelheiten des bevorzugten Ausführungsbeispiels der Erfindung, nämlich die Vorrichtung zur Erzeugung des Wattsignals und zur Erzeugung eines akkumulierten Energiesignals zur Steuerung der dem Schweißdraht während eines einzigen Schweißzyklus zugeführten Energiemenge;
- Fig. 4: einen Zeitimpuls am Ausgang des Schaltkreises nach Fig. 3;
- Fig. 5: in einem vereinfachten Schaltbild einen Teil des Schaltdiagramms der Fig. 3 mit der Darstellung einer Tast-Speichervorrichtung;
- Fig. 6: ein Diagramm zur Erläuterung der Arbeitscharakteristik des Schaltkreises gemäß Fig. 5;
- Fig. 7: ein Blockdiagramm zur Darstellung der Zweifach-Anwendung des Watt-Ausgangssignals, das entsprechend dem bevorzugten Ausführungsbeispiel der Erfindung erzeugt wird;
- Fig. 8: in einer Ansicht das Schweißdrahtende, aufgeteilt in einzelne Längenabschnitte (Inkremente) zur Erläuterung der Arbeitscharakteristik;
- Fig. 9: in einer Ansicht das Schweißdrahtende mit seinem letzten Längenabschnitt vor Beginn der Kurzschlußphase;
- Fig. 10: ein Diagramm zur Erläuterung der Arbeitscharakteristik der erfindungsgemäßen Einrichtung und des erfindungsgemäßen Verfahrens.

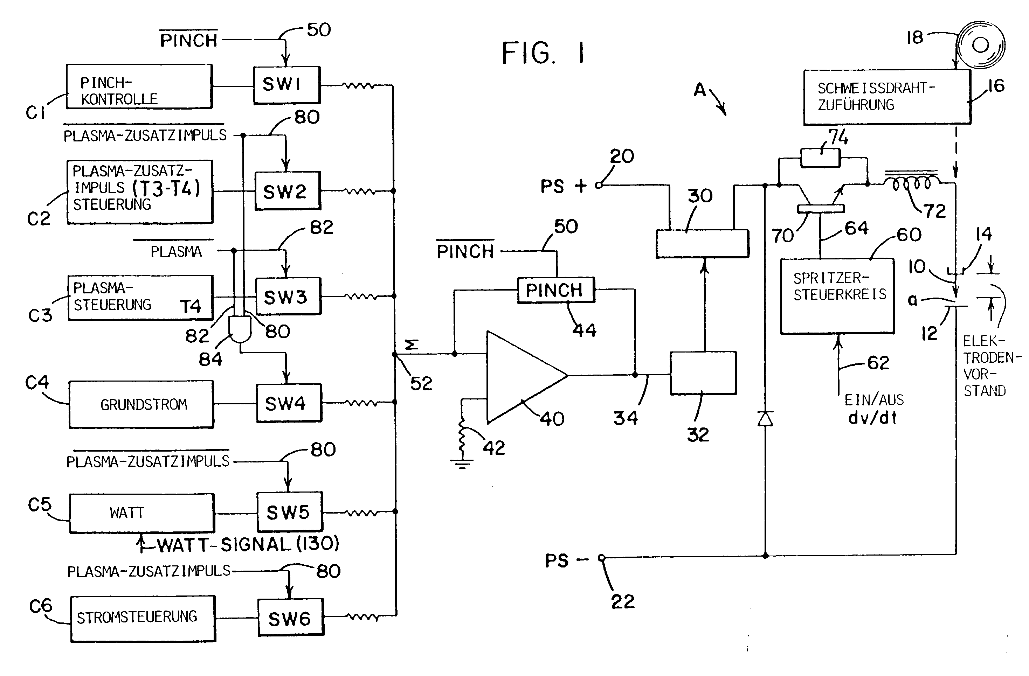

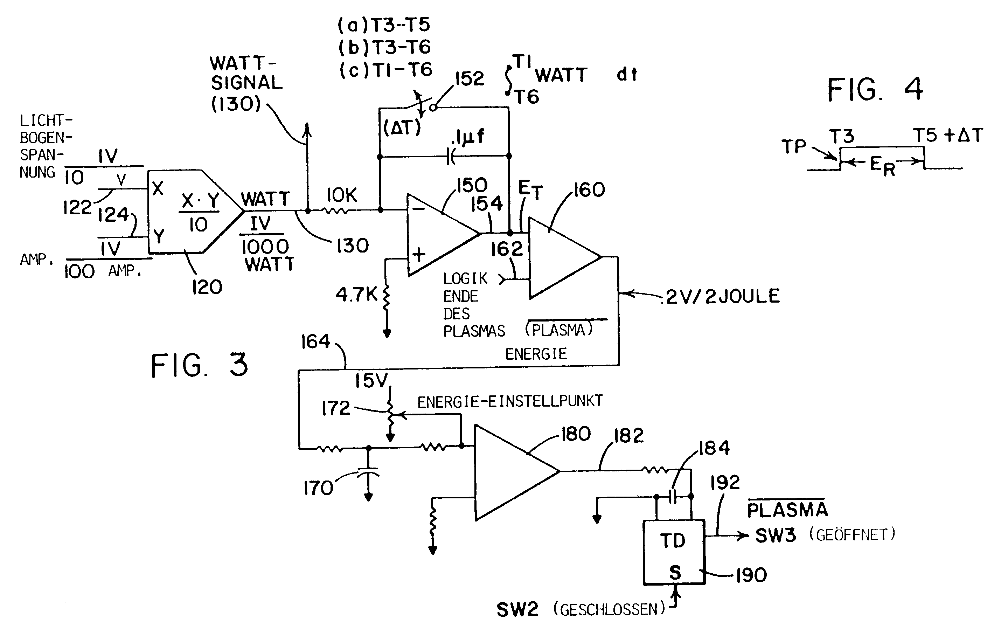

In Fig. 1 ist ein Schweißgerät bzw. eine Schweißeinrichtung zum Kurzschluß-Lichtbogenschweißen mit A bezeichnet, bei der bzw. bei dem zur Herabsetzung des Spritzerauswurfs Steuerkreise vorgesehen sind, wie sie sich aus der früheren EP-Patentanmeldung 88 121 287.2-2206 ergeben. Die vorliegende Erfindung bezieht sich auf eine Weitergestaltung und Verbesserung des Kurzschluß-Lichtbogenschweißens mit Hilfe der Einrichtung A, die in bevorzugter Ausführung in Verbindung mit dem Schaltkreis gemäß Fig. 3 zur Verwendung kommt.

Die Schweißeinrichtung A gemäß Fig. 1 weist eine Stromversorgungseinrichtung mit Stromzuführung auf, die eingangsseitig verschiedene gesonderte Stromsteuerungen zur Erzeugung gesonderter Stromverläufe innerhalb eines jeden Zyklus beim Kurzschluß-Lichtbogenschweißen umfaßt. Ein Schweißdraht 10 befindet sich mit seinem Ende im Abstand von einem Werkstück 12. Er ist in einem elektrischen Anschlußteil bzw. einem Schweißdrahthalter 14 gehalten. Der Schweißdraht 12 kann mit Hilfe einer Schweißdraht-Zuführungsvorrichtung 16 von einer Drahtspule 18 abgewickelt und mit einer von dem Schweißer bestimmten Geschwindigkeit durch den Halter 14 gegen das Werkstück 12 vorgeschoben werden. Der Halter 14 ist an die eine Klemme einer Gleichstromzuführung einer Stromversorgungseinrichtung angeschlossen. Das Maß, um das der Schweißdraht 10 aus dem Halter 14 vorsteht, wird als freies Elektrodenende bzw. als Elektrodenvorstand bezeichnet. Die Lichtbogenstrecke ist mit a angegeben. Die Stromzuführung PS weist die positive Ausgangsklemme 20 und eine negative Ausgangsklemme 22 auf. Ein Leistungsschalter 30 wird von einem Impulslängenmodulator 32 periodisch mit einer Frequenz von zumindest angenähert 20 KHz betätigt. Der Impulslängenmodulator 32 kann von Standard-Ausführung sein. Er weist eine Steuerleitung 34 auf. Die Spannung an der Steuerleitung 34 bestimmt die Breite bzw. Länge der 20 KHz-Stromimpulse, die durch den Schalter 30 hindurchgehen können. Auf diese Weise wird der durch den Schweißdraht 10 und über die Lichtbogenstrecke a fließende Schweißstrom durch verschiedene Eingangssteuerkreise C1 - C6 gesteuert, die gesondert oder auch gemeinsam verwendet werden. Die Impulslänge, welche die Spannung auf der Leitung 34 steuert, ist das Gleichstrom-Spannungsniveau am Ausgang eines von einem Widerstand 42 vorgespannten bzw. eingestellten Fehlerverstärkers 40. Ein Überbrückungs- bzw. Parallelkreis 44 wird betätigt in Abhängigkeit von der Logik einer invertierten Pinch-Leitung 50. Am Eingang des Fehlerverstärkers 40 und des Schaltkreises 44 liegt die Spannung am gemeinsamen Anschluß oder Summierpunkt 52 an. Diese Spannung wird durch die Schalter SW1 - SW6 an der Ausgangsseite der Steuerkreise C1 - C6 gesteuert. Die oberen Steuerkreise C1 - C3 werden in Verbindung mit den unteren Steuerkreisen C5 und C6 zur Zuführung und Ableitung des Stroms von der Anschlußstelle 52 verwendet, so daß der vom Fehlerverstärker 40 abgeleitete Strom die Spannung am Modulator 32 steuert. Der Grundstrom wird im Schweißbetrieb auf einem niedrigen Strompegel I_{B} durch gemeinsames Schließen der Schalter SW4 und SW6 aufrechterhalten.

In Übereinstimmung mit der früheren Ausführung der Einrichtung wird ein Spritzersteuerkreis 60 in Abhängigkeit von einem bevorstehenden Tropfenübergang (fuse) über ein Signal auf einer Leitung 62 betätigt. Dieses Verschmelzungssignal wird erzeugt von einem dv/dt-Überwachungskreis, so daß die Logik auf der Ausgangsleitung 64 den Leistungsschalter 70 unmittelbar, bevor der Tropfenübergang bzw. die Verschmelzung bei der Kurzschlußphase stattfindet, auf nicht-leitend stellt. Die Betätigung des Schalters 70 ändert den Schweißstromfluß durch eine Drossel bzw. einen Induktor 72 von einem hohen Strompegel am Schalter 70 auf einen niedrigen Strompegel über einen Stell- oder Dämpferkreis 74. Beim Fortschreiten der Kurzschlußphase eines Schweißzyklus beginnt ein (nicht dargestellter) Standard-dv/dt-Kreis mit der Überwachung der Lichtbogenspannung. Wenn der Quotient dv/dt einen eingestellten Wert übersteigt, der die bevorstehende Tropfenverschmelzung ankündigt, so verschiebt sich die Logik auf der Leitung 62. Die Spannung auf der Leitung 64 stellt den Schalter 70 auf nicht-leitend. Der Schweißstrom am Schalter 70 verstellt sich auf einen niedrigen Stromwert, so daß die bei der Tropfenverschmelzung freigesetzte Energie vermindert und demgemäß die Spritzwirkung herabgesetzt wird. Dieses Konzept ist für sich nicht Bestandteil der Erfindung, die sich insbesondere auf den Betrieb während der Lichtbogenphase des Schweißzyklus richtet.

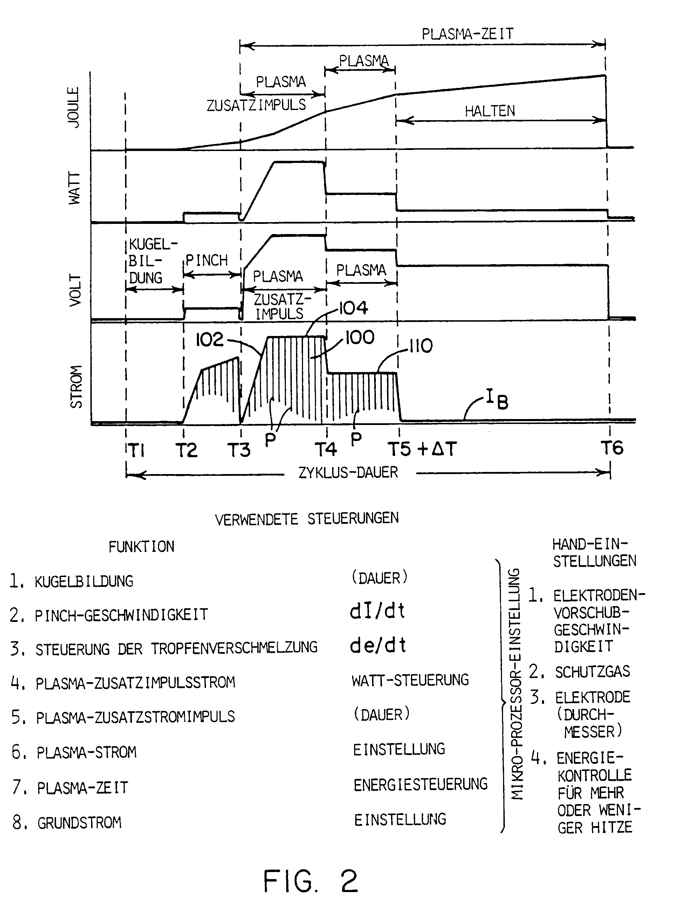

Die Länge der Hochfrequenzstromimpulse am Ausgang des Impulslängenmodulators 32, die über den Schalter 30 gelangen, wird bestimmt durch die Spannung am Anschlußpunkt 52, die ihrerseits über die Schalter SW1 - SW6 gesteuert wird. Diese Schalter werden, wie bei den Standard-Verfahren zur Steuerung des Schweißstroms, über den Verlauf des gesamten Schweißzyklus betätigt. Der Verlauf des Schweißzyklus ist vor allem der Fig. 2 zu entnehmen.

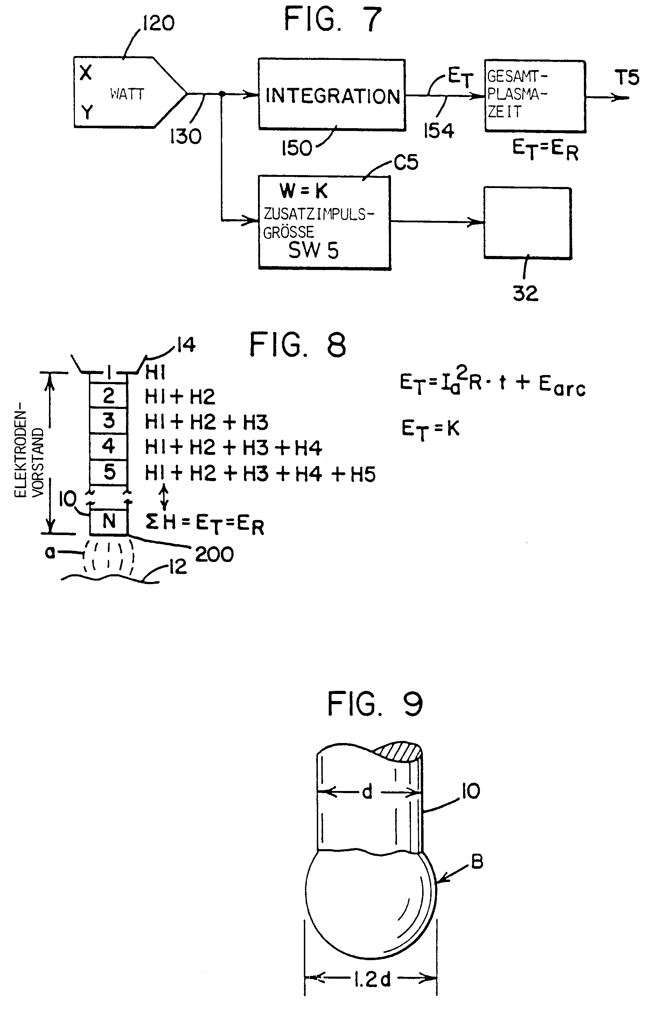

Gemäß Fig. 2 umfaßt der Schweißzyklus den Bereich zwischen dem Zeitpunkt T1 und dem Zeitpunkt T6. Fig. 2 zeigt den Verlauf des Schweißzyklus in schematischer Vereinfachung. Wie weiter unten noch erläutert wird, können im einzelnen noch Änderungen vorgesehen werden. Zur Erläuterung der Funktion der Schalter SW1 - SW6 wird davon ausgegangen, daß der Schweißzyklus im Zeitpunkt T1 beginnt. Zu diesem Zeitpunkt ist das Ende des Schweißdrahtes 10 zu der in Fig. 9 gezeigten Kugelform B aufgeschmolzen. Der Schweißdraht 10 bewegt sich in Richtung auf das Schweißmetallbad am Werkstück 12. Da der Plasma-Zusatzstromimpuls (in Fig. 2 mit "PLASMA BOOST" bezeichnet) und ein ihm folgender Plasma-Stromimpuls (in Fig. 2 mit "PLASMA" bezeichnet) noch nicht vorliegen, hat die Logik an den Eingangsleitungen 50, 80, 82 und einem AND-Gatter 84 die Schalter SW1, SW2, SW3 und SW5 deaktiviert, während sie die Schalter SW4 und SW6 aktiviert hat. Folglich ist die Grundstromsteuerung C4 in Betrieb. Dieser Steuerkreis ist kombiniert mit dem Ausgang eines Stromsteuerschalters SW6, der vom Stromsteuerkreis C6 betätigt wird. Die Impulslänge der 20 KHz-Impulse über den Schalter 30 entspricht somit derjenigen des auf niedrigem Niveau liegenden Grundstromes I_{B} (Fig. 2). Das Auftreten eines Kurzschlusses bewirkt eine Logik an der invertierten Pinch-Leitung 50 mit der Folge, daß der Schalter SW1 die Steuerung des Stromflusses über den pinch-modifizierten Rückkopplungskreis 44 übernimmt. Der Impulslängenmodulator 32 wird während der Kurzschlußphase über die Schaltkreise C1 und C6 gesteuert. Aufgrund der Kurzschlußbedingung besteht die Tendenz zu einem hohen Schweißstrom. Der Impulslängenmodulator 32 bewirkt die Begrenzung der Stromhöhe, wie dies im Diagramm der Fig. 2 in dem mit "PINCH" bezeichneten Kurvenabschnitt gezeigt ist. Bei dem dargestellten und bevorzugten Ausführungsbeispiel weist die Stromkurve hier zwei ausgeprägte Neigungen, also einen geknickten Verlauf auf. Es versteht sich aber, daß von dem Schaltkreis C1 auch andere Formen der Pinch-Impulse erzeugt bzw. gesteuert werden können. Bei bevorstehender Tropfenverschmelzung ändert sich die Logik in der Leitung 62. Dies öffnet den Schalter 70 und bewirkt eine drastische Stromverminderung über den Dämpfer 74. Dies ist in Fig. 2 für den Zeitpunkt T3 gezeigt. Die Stromverminderung kann bis auf den niedrigen Strompegel des Grundstroms I_{B} erfolgen. Bei dem dargestellten Ausführungsbeispiel wird der Grundstrom I_{B} vom Schaltkreis C4 gesteuert, so daß der Strom im Zeitpunkt T3 nicht identisch ist mit dem Grundstrom I_{B}. Unmittelbar danach wird der in Fig. 2 mit "PLASMA BOOST" bezeichnete Plasma-Zusatzstromimpuls 100 erzeugt. Dieser Impuls wird gesteuert vom Schalter SW2, der in Abhängigkeit von der Änderung der Logik in der Leitung 80 geschlossen wird. Da der Pinch-Zustand nicht beibehalten wird, ist der Schalter SW1 gesperrt und der Parallelkreis 44 deaktiviert. Für die Dauer des Plasma-Zusatzstromimpulses 100 bewirkt der Schalter SW2 mit dem Schaltkreis C2, daß der Impulslängenmodulator 32 die Steuerung der Schweißstromimpulse über den Schalter 30 steuert. Bei dem dargestellten Ausführungsbeispiel weist der Plasma-Zusatzstromimpuls 100 eine von der Impulssteuerung C2 gesteuerte vordere Impulsflanke 102 und einen ebenfalls von dem Schaltkreis C2 gesteuerten oberen Scheitelverlauf 104 auf. Gemäß dem bevorzugten Ausführungsbeispiel ist der obere Scheitelverlauf 104 ein Abschnitt mit konstanter Watt-Leistung anstelle des in Fig. 2 gezeigten konstanten Stromverlaufs. Wenn die Einrichtung A den Plasma-Zusatzstromimpuls 100 entsprechend einem konstanten Leistungswert steuert, ist der Schalter SW5 geschlossen, so daß das momentane Wattsignal vom Schaltkreis C5 überwacht wird, der über den Schalter SW5 ein Eingangssignal an der Anschlußstelle 52 erzeugt. Während des Betriebs mit Konstantleistung ist der Stromsteuerkreis C6 über eine Logik in der Leitung 80 deaktiviert, so daß der Schalter SW6 geöffnet ist.

Bei dem bevorzugten Ausführungsbeispiel der Erfindung wird während der Dauer des Plasma-Zusatzstromimpulses der Stromfluß über den Schalter 30 durch die Kreise C2 und C5 im Sinne einer konstanten momentanen Stromleistung gesteuert, die entsprechend die Abtast- bzw. Arbeitsfrequenz von 20 KHz laufend aktualisiert bzw. ändert. Während der anderen Bereiche des Schweißzyklus ist der Wattsignal-Steuerkreis C5 unwirksam, so daß die Stromsteuerung nun über den Schalter SW6 und den Eingangskreis C6 erfolgt. Zu einem festen Zeitpunkt T4 wird der Plasma-Zusatzstromimpuls 100 vom Schaltkreis C2 beendet. Die Stromsteuerung verstellt sich nun vom Schaltkreis C5 auf den Schaltkreis C6. Zu diesem Zeitpunkt legt der Schalter SW3 den Ausgang des Plasma-Steuerkreises C3 an den Modulator 32, so daß der im Zeitpunkt T3 mit der Einleitung der Lichtbogenphase nach erfolgter Tropfenverschmelzung beginnende, den Impuls 100 liefernde hohe Stromfluß in einen zweiten Plasma-Stromimpulsteil 110 übergeht, der vom Steuerkreis C3 gesteuert wird und im Zeitpunkt T5 beendet ist. Die integrierte Fläche der Impulse 100 und 110 entspricht der Gesamtenergie, die dem Schweißdraht 10 im Schweißzyklus zwischen den Zeitpunkten T1 und T6 zugeführt wird. Nach dem Auftreten des Plasma-Stromimpulses 110 mit dem gegenüber dem Grundstrom I_{B} hohen Strompegel wird der Schalter SW4 wieder geschlossen, so daß nun der den Grundstrom steuernde Schaltkreis C4 über den Fehlerverstärker 40 zur Wirkung kommt.

Die vorstehenden Zusammenhänge sind in Fig. 2 für einen einzelnen Schweißzyklus in den übereinander gezeigten Diagrammen für den Verlauf des Stroms, der Spannung, der Watt-Leistung und der Wärmekurve wiedergegeben. Im Zeitpunkt T2 stellt sich ein Kurzschluß ein, wenn die geschmolzene Metallkugel B in Kontakt mit dem Schweißmetall im Schweißbad des Werkstücks 12 gelangt. Wenn dies geschieht, steuert der Pinch-Steuerkreis C1 über den Schalter SW1 den Steuerkreis 30 über den Parallelkreis 44. Eine unmittelbare Steuerung des Stromflusses ist erforderlich, um ihn während der Kurzschlußphase zu begrenzen. Ein bevorstehender Tropfenübergang bewirkt ein Signal in der Leitung 62. Dies beendet den Pinch-Zyklus im Zeitpunkt T3. Der Schalter 70 öffnet und der Dämpfer 74 wird in Reihe mit der Drossel 72 geschaltet. Anschließend beginnt die Lichtbogenphase, die mit dem Plasma-Zusatzstromimpuls 100 eingeleitet wird, an den sich dann der Plasma-Stromimpuls 110 anschließt. Der Stromimpuls 100 ist in seiner Zeitdauer T3 - T4 fest eingestellt, während der Stromimpuls 110 zum Zeitpunkt T5 endet. Erfindungsgemäß ist die Energie, die für den Schweißbetrieb während der Zeitdauer der Impulse 100 und 110 zugeführt wird, konstant. Dies wird durch Verstellen des Zeitpunktes T5 im Sinne einer Subtraktion oder einer Addition von bzw. zu T5 bewirkt. Wie weiter unten noch näher ausgeführt wird, erfolgt die Beendigung eines Plasmaimpulses bzw. des zweiten Impulsteils des Gesamtstromimpulses zwischen den Zeitpunkten T3 und T5 in der Weise, daß bei jeder Lichtbogenphase des Schweißzyklus eine konstante Energie erhalten wird. Die während der Pinch-Phase und während der Grundstrom-Phasen erzeugte Energie wird nicht in Rechnung gestellt. Sie bleibt unberücksichtigt, da diese Energie keine Steuerfunktion hat und von untergeordneter Bedeutung ist, da sie lediglich eine Widerstandserhitzung im Schweißdraht 10 über eine verhältnismäßig kurze Zeitspanne und mit niedriger Leistung bewirkt.

Die Diagramme der Fig. 2 zeigen den Verlauf des Stroms, der Spannung, der Wattleistung und der akkumulierten Joules zu Zwecken der Übersicht vereinfacht in einem geradlinigen Verlauf. Die in Fig. 2 mit "HOLDING" angegebene Haltephase des Schweißzyklus, die nach den beiden hohen Plasma-Stromimpulsteilen beginnt, kann einen dritten Stromimpuls mit hohem Strompegel einschließen, der sich dann zu den Stromimpulsen 100 und 110 kombiniert, um während der Lichtbogenphase die gewünschte akkumulierte bzw. aufaddierte Energie zuzuführen. Bei einem solchen dritten Stromimpuls haben die beiden Impulse 100 und 110 jeweils eine feste Impulsdauer. Die Haltephase umschließt dann, wie erwähnt, einen weiteren Stromimpuls, der bewirkt, daß der Schaltkreis im Zeitpunkt T6 auf den Grundstrom I_{B} zurückschaltet. In diesem Fall wird der Zeitpunkt T6 eingestellt bzw. eingesteuert, um die während der Lichtbogenphase dem Schweißdraht zugeführte Gesamtenergie zu steuern.

Bei dem bevorzugten Ausführungsbeispiel der Erfindung wird lediglich mit zwei Stromimpulsen mit hohem Strompegel gearbeitet, um den Schweißdraht 10 während der Lichtbogenphase zu erhitzen. Dabei kann aber ein dritter hoher Stromzustand existieren, der im oberen Diagramm der Fig. 2 mit der Bezeichnung "HOLDING" ausgewiesen ist. Vorzugsweise ist die vordere Flanke 102 des Stromimpulses 100 sehr steil geneigt und im wesentlichen vertikal verlaufend, während der Scheitelverlauf 104 horizontal ist, jedoch durch Stromverstellung und entsprechende Fluktuation der Spannung auf eine konstante Leistung gesteuert wird. Hierbei wird nur eine Watt-Steuerung benötigt. Es versteht sich, daß die Diagramme der Fig. 2 nur allgemein repräsentativ sind. Die vertikalen Linien P in dem unteren Stromdiagramm der Fig. 2 geben die 20 KHz-Frequenz des Schalters 30 wieder. Letzterer schaltet während eines Schweißzyklus, also im Zeitraum T1 - T6, viele Male. Auf diese Weise ergibt sich eine genaue, zeitgerechte Steuerung des Stromflusses der Stromversorgungseinrichtung PS über den Schalter 70 zu der vom Schweißdraht 10 und dem Werkstück 12 gebildeten Schweißstation. Mit Ausnahme der Stromverstellung im Zeitpunkt T5, wenn mit zwei hohen Stromimpulsen gearbeitet wird, oder im Zeitpunkt T6, wenn mit drei Stromimpulsen gearbeitet wird, ist das Spritzersteuerungskonzept der Fig. 2, wie es mit der Einrichtung A durchgeführt wird, Inhalt der genannten früheren Patentanmeldungen der Anmelderin, auf deren Offenbarungsinhalt hier Bezug genommen werden kann.

Die Erfindung bezieht sich auf die Steuerung der Begrenzung der Wärmeenergie, die dem Schweißdraht 10 in jedem Schweißzyklus während der Lichtbogenphase zugeführt wird. Nach einem weiteren Aspekt der Erfindung wird der Schalter 30 so gesteuert, daß sich während der Dauer des Impulses 100 ein konstanter momentaner Wattpegel ergibt. Beide vorgenannten Maßnahmen werden mit Hilfe des in Fig. 3 gezeigten Schaltkreises bewirkt, der die Aufgabe hat, den Schalter SW3 zu öffnen, wenn während der Lichtbogenphase des Schweißzyklus eine vorbestimmte Energiemenge zugeführt wird. Falls für die Energiezuführung, wie oben angegeben, mit einem dritten Stromabschnitt hohen Strompegels gearbeitet wird, so kann der Zeitpunkt, zu dem der Schalter SW4 öffnet, durch den Schaltkreis der Fig. 3 gesteuert werden.

Fig. 3 zeigt einen Vervielfacher bzw. eine Multiplizierschaltung 120, die in einer Leitung 130 ein Signal erzeugt, das proportional dem Produkt des Lichtbogenspannungswertes auf der Leitung 122 und des Schweißstromwertes auf der Leitung 124 ist. Diese Werte sind Spannungswerte, die mittels geeigneter Vorrichtungen abgetastet werden, die die Gesamtspannung über der Einrichtung und den Stromfluß während des Schweißbetriebs, gesteuert als Hochfrequenz-Stromimpulse, über den Schalter 30 messen. Die Ausgangsleitung 130 der Multiplizierschaltung 120 führt zum Eingang eines Integrators bzw. einer Integrierschaltung 150. Die Anordnung ist so getroffen, daß das momentane Wattsignal auf der Leitung 130 während desjenigen Abschnitts des Schweißzyklus, der durch Betätigung eines Schalters 152 bestimmt wird, integriert wird. Bei dem bevorzugten Ausführungsbeispiel der Erfindung ist der Schalter 152 im Zeitintervall T3 - T5 geschlossen, so daß die gesamte akkumulierte Energie während dieses Zeitintervalls als Gleichstrom auf der Leitung 154 erscheint. Die akkumulierte Energie E_{T} auf der Leitung 154 kann dazu verwendet werden, den Stromfluß für den Schweißprozeß unmittelbar abzubrechen, wenn die gesamte akkumulierte Energie bei einem gegebenen Zyklus E_{T} gleich einer Bezugsenergie E_{R} (Fig. 4) ist. Diese Bezugsenergie E_{R} liegt gerade geringfügig über derjenigen Energiemenge, die zum Aufschmelzen einer Kugel gewünschter Größe am Ende des Schweißdrahtes 10 erforderlich ist. Demgemäß kann der Integrator 150 ein akkumuliertes bzw. ein Gesamt-Energiesignal oder ein Spannungsniveau auf der Leitung 154 erzeugen, das unmittelbar zur Schaltung eines Zeitgliedes bzw. eines Taktgebers verwendet wird, um den Schalter 30 über den Schalter SW4 auf den Grundstrom-Steuerkreis C4 zu stellen, wie dies in Fig. 1 gezeigt ist. Dieses Konzept würde also den Betriebszustand (a) gemäß Fig. 3 verwenden. Der Impuls TP in Fig. 4 ist der Ausgang des Schaltkreises der Fig. 3. Wird, wie oben erläutert, mit einem dritten Stromimpuls in der Lichtbogenphase gearbeitet, so ergibt sich der Betriebszustand (b) gemäß Fig. 3, bei dem der Schalter 152 in der Zeitspanne T3 - T6 betätigt ist. Die aufgerechnete bzw. akkumulierte Energie auf der Leitung 154 würde hierbei die Lage des Zeitpunktes T6 steuern. Falls erwünscht, kann die Gesamtenergie, selbst unter Einschluß des Pinch-Kreises, durch Integrierung der momentanen Wattsignale in der Leitung 130 im Zeitintervall T1 - T6 in Rechnung gestellt werden, wie der Betriebszustand (c) in Fig. 3 zeigt.

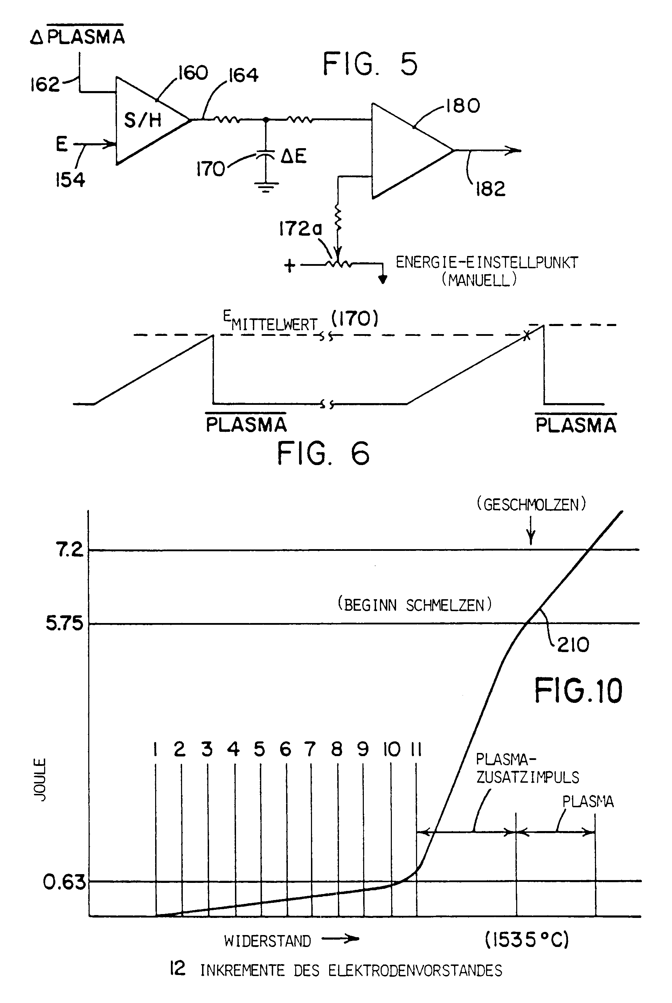

Nach obigem erscheint also die gesamte gelieferte Energie als Spannungssignal bzw. Spannungsniveau auf der Leitung 154 bei jedem einzelnen Schweißzyklus, wobei ein Signal geliefert wird, welches repräsentativ ist für die akkumulierte Energiemenge, die dem Schweißdraht über die Dauer der Impulse 100 und 110 zugeführt wird (Fig. 2). Dieses Spannungsniveau auf der Leitung 154 ist an den Eingang eines in den Fig. 3 und 5 gezeigten Tastspeicherkreises od.dgl. 160 angelegt. Eine Logik auf der Leitung 162 fragt ab und hält das der akkumulierten Energie entsprechende Spannungsniveau auf der Leitung 154 am Ende des Plasma-Stromimpulses 110. Dieses Spannungsniveau wird auf der Leitung 164 mit einem Maßstab von 0,2 V für jeweils 2,0 Joules akkumulierter Energie in Entsprechung mit dem Spannungspegel auf der Leitung 154 gehalten. Der Spannungspegel auf der Leitung 154 wird einem Saldierkondensator 170 aufgegeben, der einen Spannungsteiler mit Rheostat 172 bildet, der zur Einstellung des Energieeinstellpunktes E_{R} verwendet wird. Auf diese Weise wird ein Gleichstromsignal bzw. ein Spannungspegel dem Steuereingang eines Fehlerverstärkers 180 zugeführt. Hiermit läßt sich eine gleichförmigere Arbeitsweise erreichen, als dies bei Verwendung eines Signals der Fall wäre, das sich während jedes Schweißzyklus zwischen einem Null-Energiewert und dem aufgelaufenen bzw. aufaddierten Energiewert verschiebt.

Am Ausgang des Fehlerverstärkers 180 liegt der variable Spannungspegel auf einer Ausgangsleitung 182, die zu einem Schaltverzögerungskondensator 184 eines Schaltverzögerungskreises 190 führt. Die Spannung auf der Leitung 182 bestimmt die Spannung am Kondensator 184 zur Steuerung des Zeitintervalls zwischen dem Schließen des Schalters SW2 zum Einleiten des Plasma-Zusatzstromimpulses im Zeitpunkt T3 und dem Öffnen des Schalters SW3 im Zeitpunkt T5, bei dem der Modulator 32 auf den Grundstrom über den Leistungsschalter 30 umschaltet. Der Impuls-Schaltmodulator 32 hält somit die Steuerung für die Plasma-Impulssteuerung und dann für die Plasmasteuerung selbst aufrecht, bis der Ausgang 192 der Schaltverzögerungsvorrichtung 190 die Plasma- bzw. Lichtbogensteuerung im Zeitpunkt T5 beendet. Dies bewirkt ein Zeitverzögerungssignal, bei dem die während eines Zyklus aufgelaufene, akkumulierte Energie E_{T} der Bezugsenergie E_{R} angeglichen wird, wobei die Bezugsenergie lediglich geringfügig oberhalb derjenigen Energie liegt, die erforderlich ist, um den letzten Längenabschnitt des Schweißdrahtes durch die kombinierte Widerstands- und Lichtbogen- bzw. Anodenerhitzung aufzuschmelzen.

Wie auch in Fig. 7 dargestellt ist, kann zur Begrenzung des Plasma-Stromimpulses im Zeitpunkt T5 die Gesamtenergie E_{T} mit der Bezugsenergie E_{R} verglichen werden. Erfindungsgemäß wird die aufgelaufene Energie E_{R} dadurch aufrechterhalten, daß der Zeitpunkt T5 auf den Punkt verlegt wird, zu dem die aufgelaufene Energie die Bezugsenergie erreicht. Dies bedeutet bei dem in Fig. 3 gezeigten bevorzugten Ausführungsbeispiel, daß die gesamte aufgelaufene Energie E_{T} am Ende des Plasma-Stromimpulses geprüft bzw. abgetastet und als Spannungspegel auf die Leitung 164 gebracht wird. Während eines jeden Zyklus wird von dieser Spannung entweder die Spannung am Kondensator 170 erhöht oder vermindert, was eine Erhöhung oder Verminderung des Gleichstrompegels auf der Leitung 182 bewirkt. Die zuvor aufgelaufene Energie wird vom Kondensator 170 gemittelt, um das Maß der Zeitverzögerung für den nächsten Zyklus zu bestimmen. Die Spannung am Kondensator 184 wird am Ende eines jeden Plasma-Stromimpulses zurückgesetzt bzw. gelöscht. Bei dem Fehlerverstärker 180 handelt es sich um eine Standardvorrichtung mit hohem Verstärkungsgrad, so daß die Schwankung auf der Leitung 164 verstärkt werden kann, um den erforderlichen Maßstab für die Spannungsänderung an der Schaltverzögerungsvorrichtung 190 zu bewirken. Gleichgültig, ob mit dem unveränderlichen Plasma-Stromzusatzimpuls 100 und dem veränderlichen Plasma-Stromimpuls 110 oder aber zusätzlich mit dem oben erwähnten Halteimpuls hohen Stromwertes gearbeitet wird, wird der Stromimpuls zu einem Zeitpunkt beendet, zu dem bei jedem einzelnen Zyklus während der Lichtbogenphase dem Schweißdraht 10 eine festgelegte konstante Energie zugeführt worden ist. Fig. 6 zeigt die Spannungsänderung am Kondensator 170. Es ist erkennbar, daß der Kondensator 170 einen generellen Spannungspegel entsprechend der aus den vorhergehenden Schweißzyklen sich ergebenden, durchschnittlich aufgelaufenen Energie aufrechterhält. Demgemäß ändert jeder Zyklus die Durchschnittsenergie am Kondensator 170 nur geringfügig. Mit dieser Anordnung wird, wie vorstehend erläutert, die Spannung an der Schaltverzögerungsvorrichtung 190 gesteuert. Der in Fig. 3 gezeigte Steuerkreis und der im oberen Teil der Fig. 7 schematisch wiedergegebene Kreis sind insoweit gleichwertig, als zur Erzielung einer konstanten Erwärmungsenergie jeweils eine Vorrichtung zur Begrenzung des Hochstrombereiches bei jedem Schweißzyklus bewirkt wird.

Der untere Teil der Fig. 7 zeigt einen weiteren Aspekt des bevorzugten Ausführungsbeispiels der Erfindung. Da ein momentanes Wattsignal in der Leitung 130 auftritt, kann dieses Wattsignal zur Steuerung des Stromflusses über den Schalter 30 während des in Fig. 2 gezeigten Plasma-Zusatzstromimpulses 100 verwendet werden. Vorzugsweise arbeitet die Wattsteuerung über den Gesamtverlauf des Impulses 100, so daß sich der Scheitelbereich 104 des Impulses über die Zeitspanne T3 - T4 erstreckt. Die Leitung 130 ist zum Wattsteuerkreis C5 an der Eingangsseite des Schalters SW5 (Fig. 1) geführt, so daß der Impulslängenmodulator 32 durch den Ausgang des Schalters SW5, statt durch den Ausgang des Stromsteuerungsschalters SW6, gesteuert wird. Auf diese Weise wird der während des Plasma-Zusatzstromimpulses durch den Schalter 30 fließende Strom so gesteuert, daß die Stromleistung zu jedem Zeitpunkt konstant bleibt. Hiermit werden die oben erwähnten Probleme behoben, die sich bei Verwendung einer Konstantspannung während des Plasma-Zusatzstromimpulses oder bei Verwendung einer variablen Spannung mit Konstantstrom bei diesem Verstärkungsstromimpuls ergeben. Nach der Erfindung wird somit die dem Schweißdraht durch den Plasma-Zusatzstromimpuls 100 zugeführte hohe Energie so gesteuert, daß der Lichtbogen das Schweißbad nicht von der zur Kugelform aufgeschmolzenen Elektrodenspitze forttreibt, was zu einem zufallsbedingten Kontakt der Metallschmelzkugel am Schweißdrahtende mit dem Schweißbad führt.

In den Fig. 8 bis 10 ist die Arbeitscharakteristik der erfindungsgemäßen Einrichtung und des erfindungsgemäßen Verfahrens graphisch veranschaulicht. Fig. 8 zeigt dabei das den Elektrodenvorstand bildende freie Ende, d.h. den Überstand des Schweißdrahtes über den Schweißdrahthalter 14 in Aufteilung in eine Reihe einzelner Längenabschnitte, von denen jeder dem Metallvolumen entspricht, das zur Bildung der Kugelform B (Fig. 9) am Schweißdrahtende aufgeschmolzen wird. Die Kugel B weist einen effektiven Durchmesser auf, der etwa dem 1,2fachen Durchmesser des Schweißdrahtes 10 entspricht. Bei jedem Schweißzyklus wird jeweils der letzte Längenabschnitt des Schweißdrahtes, nach Fig. 8 der Längenabschnitt 1, auf die Schmelztemperatur von etwa 1535° C gebracht, und zwar durch den kombinierten Wärmeeffekt, der sich einerseits aus der kumulierten Erwärmung ergibt, die der Längenabschnitt 1 bei seiner Bewegung vom Halter 14 nach unten erfährt, und andererseits aus der Anodenerwärmung durch den Lichtbogen a im Anodenbereich 200. Nach der Erfindung ist die Gesamtenergie E_{T} durch den Strom im Schweißzyklus konstant und auf den Wert E_{R} gesteuert, der das Metall des Längenabschnittes 1 auf die Schmelztemperatur bringt. Während dieser Erhitzung in einem einzelnen Schweißzyklus wird der Längenabschnitt 1 aufgeschmolzen, während die nachfolgenden Längenabschnitte durch den I²R-Wärmeeffekt erhitzt werden. Die gesamte Wärmeentwicklung innerhalb eines Schweißzyklus verteilt sich demgemäß auf die Anodenerwärmung im Anodenbereich 200 und auf die Widerstandserwärmung über alle Längenabschnitte, mit denen der Schweißdraht über den Halter 14 vorsteht. Erhöht sich die Anzahl dieser Längenabschnitte, also das Maß des Elektrodenvorstandes, so erhöht sich der Gesamtwiderstand, so daß der Anteil der Widerstandserwärmung größer wird. Da sich der Widerstand mit der Temperatur erhöht, ist der Anteil der Widerstandserhöhung der unteren Längenabschnitte des Schweißdrahtes größer. Die Energiekonstante des letzten Längenabschnitts am Schweißdrahtende ist die Summierung der Widerstandserwärmung über die einzelnen aufeinanderfolgenden Schweißzyklen, bei denen sich die einzelnen Längenabschnitte nach unten, d.h. in Richtung gegen das Schweißbad, bewegen. Wenn beispielsweise der Elektrodenvorstand bzw. das freie Elektrodenende in seiner Länge konstant bleibt, entspricht die Gesamterwärmung des letzten Längenabschnittes, bevor dieser der Anodenerwärmung unterliegt, einem Wärmewert, der sich im wesentlichen aus der Addition der Widerstandserwärmung über die vorausgehenden Erwärmungszyklen ergibt. Bei Nichtberücksichtigung der kleinen Widerstandsänderungen ist dieser Wärmewert also die Widerstandserwärmung über die Anzahl der einzelnen Erwärmungszyklen hinweg der den Elektrodenvorstand bildenden Längenabschnitte des Schweißdrahtes. Die dem Schweißdraht während eines Schweißzyklus zugeführte Gesamtwärmeenergie teilt sich auf die Anodenerwärmung und die Widerstandserwärmung auf. Die sich bei der Abwärtsbewegung eines Schweißdraht-Längenabschnittes akkumulierende Widerstandserwärmung ist die Restenergie des letzten Längenabschnittes. Die Widerstandserwärmung aller Längenabschnitte in einem Zyklus ist im wesentlichen gleich der Differenz zwischen der Anodenerwärmung und der im Zeitintervall T3 - T5 zugeführten Gesamtenergie. Wenn daher die Gesamtenergie im Zeitintervall T3 - T5 konstant gehalten wird, ist stets eine kontrollierte Energie vorhanden, die sich aus der akkumulierten Widerstandserwärmung und aus der Erwärmung im Zyklus ergibt, der die Temperatur des Längenabschnitts 1 auf einen feststehenden, ausgewählten Gesamtenergiewert E_{T} anhebt.

Die zwei Zyklen vollziehen sich etwa dreißig- bis hundertmal je Sekunde und der Strom wird während eines Schweißzyklus mit einer Frequenz von 20 KHz gesteuert, wie durch die vertikalen Linien P im Stromdiagramm der Fig. 2 gezeigt ist. Demgemäß bewegen sich die einzelnen Längenabschnitte des Schweißdrahtes 10 vom Halter 14 mit einer Geschwindigkeitsgröße von 30 bis 100 je Sekunde. Diese Geschwindigkeit ist wesentlich größer als die Geschwindigkeit, mit der sich normalerweise der Elektrodenvorstand bei Handbedienung des Halters 14 während des Schweißprozesses ändert. Das bedeutet, daß sich bei Änderung des Elektrodenvorstandes die Verhältnisse, die sich aus der Steuerung der aufgelaufenen Gesamtenergie E_{T} während der Lichtbogenphase eines Zyklus nicht entsprechend ändern. Eine unterschiedliche akkumulierte Widerstandserhitzung vollzieht sich daher wesentlich langsamer als jede Änderung in der Anzahl der Schweißdraht-Längenabschnitte. Demgemäß ist bei dem in Fig. 8 gezeigten Beispiel die Erwärmung H1 gleich der Erwärmung H2, gleich der Erwärmung H3, gleich der Erwärmung H4, gleich der Erwärmung H5 usw. Die Summierung der Energie im Längenabschnitt 1 vor seiner Aufschmelzung entspricht im wesentlichen der Gesamtwiderstandserwärmung im letzten Schweißzyklus, wenngleich sie sich am Längenabschnitt 1 stufenweise über mehrere Zyklen hinweg ergibt.

Im folgenden wird die Verteilung zwischen der Widerstandserwärmung und der Anodenerwärmung bei sich mit dem Elektrodenvorstand ändernder Anzahl der Längenabschnitte des Schweißdrahtes anhand eines Beispiels angegeben:

### BEISPIEL

| | |
|---|---|
| Elektrode (Durchmesser) | 1,14 mm |
| Elektroden-Vorschubgeschwindigkeit | 2.565,4 mm/min. |
| Elektrodenvorstand | 12,2 mm |
| Frequenz | 62 Hz |
| Längenabschnitt (Inkrement) | 0,68 mm |
| Standard-Längenabschnitte | 17 |
| Standard-Plasma-Zeit | 0,00089 sec. |
| Plasma-Strom | 160 amp. |
| Plasma-Stromerhöhung | 330 amp. |
| Plasma-Stromerhöhungsdauer | 0,00140 sec. |

| Längenabschnitte in Gesamterhitzung | Akkumulierte Widerstandserhitzung im letzten Längenabschnitt (Joules) | Anodenerhitzung (Joules) | Gesamt-Erhitzung Joules (Zyklen) Schmelze 7,2 Joules |
|---|---|---|---|
| 4 | 0,1997 | 7,0704 | 7,2701 |
| 6 | 0,3138 | 6,9563 | 7,2701 |
| 8 | 0,4372 | 6,8329 | 7,2701 |
| 10 | 0,5691 | 6,7010 | 7,2701 |
| 12 | 0,7088 | 6,5613 | 7,2701 |
| 14 | 0,8550 | 6,4151 | 7,2701 |
| 16 | 1,0066 | 6,2635 | 7,2701 |
| *17 | 1,0839 | 6,1862 | 7,2701 |
| 18 | 1,1639 | 6,1062 | 7,2701 |
| 20 | 1,3364 | 5,9337 | 7,2701 |
| 22 | 1,5164 | 5,7537 | 7,2701 |
| 24 | 1,7004 | 5,5697 | 7,2701 |

Bei jedem beliebigen Zyklus ist die Gesamt-Widerstandserhitzung (in Joules) für den der Erhitzung unterliegenden Längenabschnitt gleich der Gesamtwiderstandserhitzung des vorliegenden Zyklus. Durch Kontrolle des Gesamt-Energieeinstellpunktes E_{T} ergibt sich, daß die Anodenerhitzung (in Joules) bei jedem Schweißzyklus als Addition zu der akkumulierten Widerstandserhitzung in dem zu schmelzenden Längenabschnitt sowohl die aktuelle Anodenerhitzung als auch die akkumulierte Widerstandserhitzung des letzten Längenabschnitts steuert. Diese beiden Erwärmungsquellen für den letzten Längenabschnitt des Schweißdrahtes addieren sich stets zu der Gesamtenergie E_{T}, die erfindungsgemäß auf den gewünschten Wert eingesteuert wird. Dieser Zusammenhang ist auch in der graphischen Darstellung der Fig. 10 für ein Beispiel wiedergegeben, bei dem insgesamt 12 den Elektrodenvorstand bildende Längenabschnitte gewählt sind. Bei einem Elektrodenvorstand mit 24 Längenabschnitten besitzt der letzte Längenabschnitt, der die untere Position bzw. die Lichtbogenposition erreicht, einen sich aus der akkumulierten Widerstandserwärmung ergebenden Wärmeinhalt von 0,7088 Joules. Durch Einstellen des akkumulierten Bezugsenergiewertes E_{R} auf 7,2701 Joules ergibt sich eine Anodenerhitzung von 6,5613 Joules, bevor durch einen Impuls TP der Schaltverzögerungsvorrichtung 190 oder durch Real-Plasmazeitsteuerung, wie in Fig. 7 angegeben, der Zeitpunkt T5 begrenzt wird. Dieses Prinzip besteht unabhängig davon, wie viele Längenabschnitte des Schweißdrahtes den Elektrodenvorstand bilden. Die Gesamtenergie ist die eingestellte bzw. ausgewählte Energie E_{T}, die sich aus der Summe der Widerstandserhitzung und der Anodenerhitzung ergibt. In der Position 12 gemäß Fig. 10 hat der aufzuschmelzende Längenabschnitt einen durch die Widerstandserhitzung bewirkten akkumulierten Wärmeinhalt von 0,7088 Joules. Während des Plasma-Zusatzstromimpulses wird eine festgesetzte Energiemenge zugeführt, die nicht ausreicht, um diesen Längenabschnitt aufzuschmelzen, was 7,2 Joules erfordert. Die gesamte aufaddierte Energie über die Dauer des Plasma-Zusatzimpulses 100 und des Plasma-Impulses 110 hebt die Metalltemperatur über den Umwandlungsbereich 210 so weit an, daß das aufgeschmolzene Metall die Kugelform annimmt. Die Bezugenergie E_{R}, die während eines jeden Schweißzyklus kontrolliert wird, sollte lediglich geringfügig oberhalb derjenigen Energie liegen, die für das Aufschmelzen zu der Kugelform notwendig ist. Dies kann dadurch geschehen, daß der Schweißer den Leistungseinstellpunkt am Spannungsteiler 172 in Fig. 3 bzw. das Bezugspotential 172a in Fig. 5 von Hand ändert. Diese beiden Einstellschaltungen ermöglichen jeweils eine Steuerung des Spannungspegels auf der Leitung 182 für die vorgenannten Zwecke.

Insgesamt ergibt sich somit, daß bei Verwendung einer mit Hochfrequenz arbeitenden Stromversorgungseinrichtung durch Steuerung der Gesamtenergie in jedem Schweißzyklus während der Lichtbogenphase desselben der Elektrodenvorstand sich unter normalen Bedingungen ändern kann, ohne daß sich hierbei der Schweißprozeß ändert. Demgemäß kann nach der Erfindung das frühere, auf die Verminderung der Schweißspritzer gerichtete Verfahren in gleicher Weise auch für das halbautomatische Schweißen erfolgreich eingesetzt werden. Da die Erfindung mit einem momentanen Wattsignal arbeitet, läßt sich dieses Signal zur Steuerung des Stroms 104 (Fig. 2) während der Dauer des Plasma-Verstärkungsimpulses 100 einsetzen, um den Konstant-Wattbetrieb zu bewirken, mit dem sich die genannten Nachteile vermeiden lassen, die bei Betrieb entweder mit konstanter Spannung oder mit einer Konstantstromsteuerung während des energiereichen Plasma-Zusatzstromimpulses arbeiten. Die in Fig. 1 gezeigten einzelnen Stromsteuerkreise für die Pinch-Steuerung C1, für die Steuerung des Lichtbogen-Zusatzimpulses C2, für die Plasma- bzw. Lichtbogensteuerung C3, für die Steuerung des Grundstromes C4, gleichgültig, ob dieser nur ein einziges niedriges Stromniveau oder aber zwei Stromniveaus umfaßt, und für die Stromsteuerung C6 werden auch bei den bekannten Systemen zur Stromsteuerung beim Kurzschluß-Lichtbogenschweißen verwendet. Die vorliegende Erfindung fügt dieser vorausgegangenen Entwicklung den Wattsteuerkreis C6 mit dem Schalter SW5 für die Stromsteuerung während der Steuerung des Plasma-Zusatzimpulses über den Schalter SW2 hinzu. Dieses Konzept der Watt- bzw. Leistungssteuerung bildet einen wesentlichen Aspekt der Erfindung.

In Fig. 3 ist ein bevorzugtes Ausführungsbeispiel der Erfindung gezeigt, während Fig. 7 eine geringfügige Modifikation desselben schematisch wiedergibt. Bei beiden Ausführungsformen ist die Gesamtenergie E_{T}, die sich aus dem effektiven Stromfluß der Anodenerhitzung und der Gesamt-Widerstanderhitzung der den Elektrodenvorstand bildenden Längenabschnitte zusammensetzt, während jeder Lichtbogenphase des Schweißzyklus konstant.

## Patentansprüche

1. Einrichtung zum Kurzschluß-Lichthogenschweißen, mit einer einzelnen Gleichstromversorgungseinrichtung, die einen Schweißstrom mit veränderlicher Stromstärke über einen Schweißdraht und ein Schmelzbad an einem Werkstück leitet, wobei der Schweißdraht mit veränderlichem Abstand von einem Halter vorragt und einer Folge von Schweißzyklen unterworfen ist, von denen jeder eine Lichtbogenphase umfaßt, während der die dem Schweißdraht zugeführte Energie das Drahtende zu einer Schmelzmetallkugel aufschmilzt, und eine Kurzschlußphase umfaßt, in der die Schmelzmetallkugel in Kontakt mit dem Schmelzbad gelangt, und dann zum Tropfenübergang eingeschnürt und abgetrennt wird, worauf der Lichtbogen für den nächsten Schweißzyklus gezündet wird, **gekennzeichnet durch** eine Vorrichtung (C₂,C₃,C₅,C₆) zum Erzeugen eines Stromimpulses (100,110) zu Beginn der Lichtbogenphase und durch eine Vorrichtung zum Ermitteln der dem Schweißdraht (10) während des Stromimpulses (100,110) zugeführten Energie (E_{T}) und zum Beenden des Stromimpulses (100,110), wenn die zugeführte Energie (E_{T}) einem vorherbestimmten Energiewert (E_{R}) entspricht.

2. Einrichtung nach Anspruch 1, **dadurch gekennzeichnet, daß** der Stromimpuls (100,110) einen sich zuerst einstellenden Plasma-Zusatzimpulsteil (100) mit einem ersten hohen Stromniveau und einen daran anschließenden Plasma-Stromimpulsteil (110) mit einem zweiten hohen Stromniveau umfaßt.

3. Einrichtung nach Anspruch 1 oder 2 , **dadurch gekennzeichnet, daß** die Vorrichtung zum Ermitteln der zugeführten Energie (E_{T}) und zum Beenden des Stromimpulses folgende Bauteile umfaßt:
- eine Energie-Summiervorrichtung (120,150,152) zur Summierung der dem Schweißdraht (10) während des Stromimpulses (100,110) zugeführten Energie (E_{T});
- eine Zeitdauer-Begrenzungsvorrichtung (160,180,190) zur zeitlichen Begrenzung des Stromimpulses (100,110) während eines Schweißzyklus, wenn die summierte Energie (E_{T}) den vorbestimmten Energiewert (E_{R}) erreicht, der größer ist als eine Energiemenge, die zum Aufschmelzen einer bestimmten Drahtmenge (N) erforderlich ist.

4. Einrichtung nach einem der Ansprüche 1-3, **dadurch gekennzeichnet, daß** eine Grundstromsteuerung (C₄) vorgesehen ist, die einen Grundstrom (I_{B}) niedrigen Niveaus zwischen Draht (10) und Werkstück (12) nach Beendigung des Stromimpulses (100,110) bis zur nächsten Kurzschlußphase bereitstellt.

5. Einrichtung nach einem der Ansprüche 1-4, **dadurch gekennzeichnet, daß** die Energie-Summiervorrichtung (120,150,152) eine Multipliziervorrichtung (120) zur Erzeugung eines Wattsignals (130) aus dem Produkt der Lichtbogenspannung (122) und des Schweißstroms (124) umfaßt und eine Integriervorrichtung (150) hat, die das Wattsignal (130) zumindest während der Dauer des gesamten Stromimpulses (100,110) integriert und ein Signal (164) liefert, das die dem Schweißdraht (10) während der Lichtbogenphase zugeführte Energie anzeigt.

6. Einrichtung nach einem der Ansprüche 1-5, **dadurch gekennzeichnet, daß** eine Energie-Einstellvorrichtung (C₅,SW₅) zur Konstanthaltung der dem Schweißdraht (10) während der Dauer des Plasma-Zusatzimpulsteils (100) zugeführten elektrischen Leistung vorgesehen ist.

7. Einrichtung nach einem der Ansprüche 1-6, **dadurch gekennzeichnet, daß** die Energie-Einstellvorrichtung (C₅, SW₅) mit einem einen Leistungsschalter (30) schaltenden Impulslängenmodulator (32) zusammenwirkt.

8. Einrichtung nach einem der Ansprüche 1 bis 7, **dadurch gekennzeichnet, daß** der genannte Stromimpuls (100,110) einen dem zweiten Impulsteil (110) folgenden dritten Impulsteil aufweist.

9. Einrichtung nach einem der Ansprüche 1 bis 8, **dadurch gekennzeichnet, daß** der erstauftretende Impulsteil (100) des Stromimpulses (100,110) in seiner Impulsdauer unveränderlich ist.

10. Einrichtung nach Anspruch 8 oder 9, **dadurch gekennzeichnet, daß** der zweite Impulsteil (110) des Stromimpulses in seiner Impulsdauer unveränderlich ist.

11. Einrichtung nach einem der Ansprüche 1 bis 10, **dadurch gekennzeichnet, daß** eine Vorrichtung zur Sperrung der Summiervorrichtung (120,150,152) während der Kurzschlußphase des Schweißzyklus vorgesehen ist.

12. Einrichtung nach einem der Ansprüche 1 bis 11, **dadurch gekennzeichnet, daß** die Schweißzyklen eine im wesentlichen gleichbleibende Zyklusdauer haben und die Stromversorgungseinrichtung (PS) eine Vorrichtung zur Lieferung einer Folge von Eingangsstromimpulsen über den Schweißdraht (10) und das Werkstück (12) mit einer Impulsfrequenz (P) aufweist, die erheblich größer ist als die Frequenz der Schweißzyklen, und daß eine Impulslängen-Einstellvorrichtung (32) zur Verstellung des Stromflusses zwischen Schweißdraht (10) und Werkstück (12) während des Schweißzyklus vorgesehen ist.

13. Einrichtung nach Anspruch 12, **dadurch gekennzeichnet, daß** die genannte Impulsfrequenz (P) größer ist als 10 KHz, vorzugsweise bei 20 KHz liegt.

14. Einrichtung nach einem der Ansprüche 1 bis 13, **dadurch gekennzeichnet, daß** eine Schaltvorrichtung (40) zur Beaufschlagung des Schweißdrahtes (10) und des Werkstücks (12) mit den genannten Eingangsstromimpulsen (P) und ein zu der Schaltvorrichtung paralleler Zweigkreis (44) hoher Impedanz vorgesehen sind, letzterer zum Öffnen der Schaltvorrichtung (40) während der Kurzschlußphase unmittelbar bevor die Schmelzmetallkugel (B) abgesprengt und der Lichtbogen gezündet wird.

15. Verfahren zum Kurzschluß-Lichtbogenschweißen unter Verwendung einer einzelnen Gleichstromversorgungseinrichtung, die einen Schweißstrom mit veränderlicher Stromstärke in den Schweißkreis eines mit veränderbarem Elektrodenvorstand an einem Kalter angeordneten Schweißdrahtes und eines Schweißbades am Werkstück liefert, wobei der Schweißstrom von einer Lichtbogenspannung abhängt und der Schweißdraht einer Folge von Schweißzyklen unterworfen ist, die eine Lichtbogenphase umfassen, in der die dem Schweißdraht zugeführte Energie das Schweißdrahtende zu einer Schmelzmetallkugel aufschmilzt, und die eine Kurzschlußphase umfassen, bei der die Schmelzmetallkugel in Kontakt mit dem Schweißbad gelangt und abgetrennt wird, **dadurch gekennzeichnet, daß** der Schweißdraht während der Lichtbogenphase eines jeden Schweißzyklus mit einer vorgewählten Energie (E_{R}) beaufschlagt wird, die den zum Aufschmelzen des Schweißdrahtendes (N) erforderlichen Energiewert übersteigt.

16. Verfahren nach Anspruch 15, **gekennzeichnet durch** folgende Merkmale:
a) Erzeugen eines Stromimpulses (100,110) bei Einleiten der Lichtbogenphase, der einen sich zuerst einstellenden Plasma-Zusatzimpulsteil (100) mit einem ersten erhöhten Stromniveau (104) und einen nachfolgenden Plasma-Stromimpulsteil (110) mit einem zweiten Stromniveau aufweist;
b) Summieren der dem Schweißdraht (10) während des Stromimpulses (100,110) im Schweißzyklus zugeführten Energie;
c) Begrenzen des Plasma-Stromimpulsteils (110) zu einem Zeitpunkt (T₅+ΔT ), zu dem die summierte Energie (E_{T}) einen vorbestimmten Wert (E_{R}) erreicht, der größer ist als der Energiewert, der zum Aufschmelzen des Drahtendes (N) erforderlich ist;
d) Zuführen eines im Stromniveau niedrigen Grundstromes (IB) über den Schweißdraht und das Werkstück, bis die nächste Kurzschlußphase des Schweißzyklus beginnt.

17. Verfahren nach Anspruch 15 oder 16, **dadurch gekennzeichnet, daß** zur Summierung der Energie ein Wattsignal (130) als momentanes Produkt der Lichtbogenspannung (122) und des Schweißstromes (124) gebildet wird, und daß das Wattsignal zumindest für die Dauer (T₃-T₅) des Stromimpulses (100,110) integriert wird, um ein Signal (164) zu erhalten, das eine Aussage über die im Verlauf des genannten Stromimpulses (100,110) dem Schweißdraht(10) zugeführte Energie enthält.

18. Verfahren nach einem der Ansprüche 15 bis 17, **dadurch gekennzeichnet, daß** das erste Stromniveau (104) eingestellt wird, um das Wattsignal (130) während des ersten Impulsteils (100) konstant zu halten.

19. Verfahren nach Anspruch 18, **dadurch gekennzeichnet, daß** die genannte Einstellung des Stromniveaus (104) mit Hilfe eines die Stromzuführung steuernden Impulslängenmodulator-Schopperkreises (30,32) durchgeführt wird, wobei die Impulslänge dieses Schopperkreises in Abhängigkeit von Abweichungen des Wattsignals (130) von dem Konstantwert geändert wird.

## Claims

1. A device for short-circuit arc welding, comprising a single direct-current power supply which ducts a welding current of adjustable current output over a welding wire and a melting bath on a workpiece, and that the welding wire projects over an adjustable distance from a holder and is subjected to a sequence of welding cycles, each of which including an arc phase, whilst the energy fed to the welding wire melts the wire end into a fusible metal ball, and including a short-circuit phase during which the fusible metal ball makes contact with the melting bath and is then constricted and separated for the drop transfer, whereafter the arc is ignited for the next welding cycle, **characterized by** a device (C₂, D₃, C₅, C₆) for generating a current pulse (100, 110) at the start of the arc phase and by a device for determining the energy (E_{T}) fed to the welding dire (10) during the current pulse (100, 110) and for terminating the current pulse (100, 110) when the delivered energy (E_{T}) corresponds with a predetermined energy value (E_{R}).

2. A device according to claim 1, **characterized in that** the current pulse (100, 110) includes an initially occurring plasm supplementary pulse portion (100) with a first high current level and a subsequent plasm current pulse portion (110) With a second high current level.

3. A device according to claim 1 or 2, **characterized in that** the device includes the following components for detection of delivered energy (E_{T}) and termination of the current pulse:
- an energy summation unit (120, 150, 152) for summation of energy (E_{T}) fed to the welding dire (10) during the current pulse (100, 110);
- a temporal duration limiting unit (160, 180, 190) for temporal limitation of the current pulse (100, 110) during a welding cycle, when the summed energy (E_{T}) arrives at a predetermined amount of energy (E_{R}) which is greater than an amount of energy required for melting a specified quantity of wire (N).

4. A device according to one of claims 1 - 3, **characterized in that** a basic-current control (C₄) is provided which makes available a low level basic current (I_{B}) between the wire (10) and the workpiece (12) after termination of the current pulse (100, 110) and up to the next short-circuit phase.

5. A device according to one of claims 1 - 4, **characterized in that** the energy summation unit (120, 150, 152) includes a multiplication unit (120) to generate a watt signal (130) from the product of arc voltage (122) and welding current (124) and an integration unit (150), which integrates the watt signal (130) at least for the duration of the entire current pulse (100, 110) and delivers a signal which indicates the energy delivered to the welding wire (10) during the arc phase.

6. A device according to one of claims 1 - 5, **characterized in that** an energy adjusting unit (C₅, SW₅) is provided to hold constant the electrical output to the welding dire (10) for the duration of the plasm supplementary pulse portion (100).

7. A device according to one of claims 1 - 6, **characterized in that** the energy adjusting unit (C₅, SW₅) co-acts with a pulse-length modulator (32) which operates an output switch (30).

8. A device according to one of claims 1 - 7, **characterized in that** the aforementioned current pulse (100, 110) comprises a third pulse portion which succeeds a second pulse portion (110).

9. A device according to one of claims 1 - 8, **characterized in that** the pulse duration of the initial pulse portion (100) of the current pulse (100, 110) is unchangeable.

10. A device according to claim 8 or 9, **characterized in that** the pulse duration of the second pulse portion (110) of the current pulse is unchangeable.

11. A device according to one of claims 1 to 10, **characterized in that** a device for locking the summation unit (120, 150, 152) during the short-circuit phase of the welding cycle is provided.

12. A device according to one of claims 1 to 11, **characterized in that** the welding cycles are of an essentially unchanging cycle duration, and the power supply (PS) comprises a device for delivery of a succession of input current pulses visa the welding dire (10) and the workpiece (12) with a pulse frequency (P) which is significantly higher than the frequency of the welding cycles, and that a pulse-duration setting unit (32) is provided for adjusting the current flow between welding wire (10) and workpiece (12) during a welding cycle.

13. A device according to claim 12, **characterized in that** the aforementioned pulse frequency (P) is higher than 10 kHz, preferably 20 kHz.

14. A device according to one of claims 1 to 13, **characterized in that** a switch circuit (40) for loading the welding wire (10) of the workpiece (12) With the aforementioned input current pulses (P) and a high impedance branch circuit (44) parallel to the switch circuit are provided, the latter for opening the switch circuit (40) during the short-circuit phase immediately before the fusible metal ball (B) is blown off and the arc is ignited.

15. A process for short-circuit arc welding using a single direct-current supply which delivers a welding current of adjustable output into the welding circuit of a welding wire arranged in a holder of adjustable electrode prominence and of a welding bath on the workpiece, and that the welding current is dependent on an arc voltage and the welding wire is subjected to a succession of welding cycles, including an arc phase in which the energy delivered to the welding wire melts the end of the welding wire into a fusible metal ball, and which include a short-circuit phase in which the fusible metal ball makes contact with the welding bath and is separated, **characterized in that** the welding wire is during the arc phase of each welding cycle loaded with a preselected energy (E_{R}) which exceeds the energy value required for melting the end of the welding wire (N).

16. A process according to claim 15, **characterized by** the following features:
a) generating a current pulse (100, 110) during the introduction of the arc phase, comprising an intially established plasm supplementary pulse portion (100) with a first increased current level (104) and a following plasm current pulse portion (110) with a second current level;
b) summation of the energy delivered to the welding wire (10) during the current pulse (100, 110) in the welding cycle;
c) limiting the plasm current pulse portion (110) at a moment in time (T₅+ΔT), at which the summed energy (E_{T}) arrives a predetermined value (E_{R}) which is greater than the energy value which is required for melting the dire end (N);
d) delivering a basic current (IB) which is low in the current level via the welding wire and the workpiece until the next short-circuit phase of the welding cycle begins.

17. A process according to claim 15 or 16, **characterized in that**, for the purpose of energy summation, a watt signal (130) is generated as an instantaneous product of the arc voltage (122) and of the welding current (124), and that the watt signal is integrated at least for the duration (T₃-T₅) of the current pulse (100, 110), in order to obtain a signal containing a statement about the energy fed to the welding dire (10) in the course of the aforementioned current pulse (100, 110).

18. A process according to one of claims 15 to 17, **characterized in that** the first current level (104) is set in order to keep the watt signal (130) constant during the first pulse portion (100).

19. A process according to claim 18, **characterized in that** the aforementioned setting of the current level (104) is carried out by means of a pulse length modulator chopper circuit (30, 32), and that the pulse length of the chopper circuit is adjusted in dependence of fluctuations of the watt signal (130) from the constant value.

## Revendications

1. Dispositif pour la soudure à l'arc électrique par court-circuit, comportant un seul dispositif d'alimentation en courant continu qui conduit un courant de soudure à intensité de courant variable à travers un fil à souder et un bain de fusion vers une pièce à souder, le fil à souder dépassant d'un support avec une distance variable et étant soumis à une suite de cycles de soudure dont chacun comporte une phase d'arc, pendant laquelle l'énergie amenée au fil à souder fait fondre l'extrémité du fil à souder en une sphère de métal fondu, et une phase de court-circuit, dans laquelle la sphère de métal fondu entre en contact avec le bain de fusion et est ensuite étranglée et séparée pour la transition de la goutte, à la suite de quoi l'arc électrique est amorcé pour le cycle de soudure suivant, caractérisé par un dispositif (C2, C3, C5, C6) destiné à produire une impulsion de courant (100, 110) au début de la phase d'arc et par un dispositif destiné à déterminer l'énergie (E_{T}) apportée au fil à souder (10) pendant l'impulsion de courant (100, 110) et à arrêter l'impulsion de courant (100, 110), lorsque l'énergie apportée (E_{T}) correspond à une valeur d'énergie (E_{R}) préalablement déterminée.

2. Dispositif selon la revendication 1, caractérisé en ce que l'impulsion de courant (100, 110) comporte une partie d'impulsion supplémentaire à plasma (100) se produisant en premier, avec un premier niveau d'intensité de courant élevé, et une partie d'impulsion de courant à plasma (110) qui y succede, avec un deuxième niveau d'intensité de courant élevé.

3. Dispositif selon la revendication 1 ou 2, caractérisé en ce que le dispositif destiné à déterminer l'énergie apportée (E_{T}) et à arrêter l'impulsion de courant comporte les éléments de construction suivant:
- un dispositif sommateur d'énergie (120, 150, 152) pour sommer l'énergie (E_{T}) apportée au fil à souder (10) pendant l'impulsion de courant (100, 110);
- un dispositif délimiteur de temps (160, 180, 190) pour délimiter la durée de l'impulsion (100, 110) pendant un cycle de soudure, lorsque l'énergie sommée (E_{T}) atteint la valeur d'énergie prédéfinie (E_{R}) qui est supérieure à une quantité d'énergie nécessaire à la fusion d'une quantité de fil (N) déterminée.

4. Dispositif selon l'une des revendications 1 à 3, caractérisé en ce qu'une commande de courant de base (C4) est prévue, qui approvisionne un courant de base (IB) à niveau d'intensité faible entre le fil (10) et une pièce à souder (12) à la fin de l'impulsion de courant (100, 110) jusqu'à la phase de court-circuit suivante.

5. Dispositif selon l'une des revendications 1 à 4, caractérisé en ce que le dispositif sommateur d'énergie (120, 150, 152) comporte un dispositif multiplicateur (120) destiné à produire un signal de puissance (130) à partir du produit de la tension dans l'arc électrique (122) et du courant de soudure (124), et un dispositif intégrateur (150), lequel intègre le signal de puissance (130) au moins pendant la durée de l'impulsion de courant (100, 110) entière et produit un signal (164) qui indique l'énergie amenée au fil à souder (10) pendant la phase d'arc.

6. Dispositif selon l'une des revendications 1 à 5, caractérisé en ce qu'un dispositif régulateur d'énergie (C₅, SW₅) destiné à stabiliser la puissance électrique amenée au fil à souder (10) pendant la durée de la partie d'impulsion supplémentaire à plasma (100) est prévu.

7. Dispositif selon l'une des revendications 1 à 6, caractérisé en ce que le dispositif régulateur d'énergie (C₅, SW₅) coopère avec un modulateur de durée d'impulsion (32) qui commande un commutateur de puissance (30).

8. Dispositif selon l'une des revendications 1 à 7, caractérisé en ce que ladite impulsion de courant (100, 110) comporte une troisième partie d'impulsion qui succède à la deuxième partie d'impulsion (110).

9. Dispositif selon l'une des revendications 1 à 8, caractérisé en ce que la partie d'impulsion (100) de l'impulsion de courant (100, 110) se produisant en premier a une durée d'impulsion invariable.

10. Dispositif selon l'une des revendications 8 ou 9, caractérisé en ce que la deuxième partie d'impulsion (110) de l'impulsion de courant a une durée d'impulsion invariable.

11. Dispositif selon l'une des revendications 1 à 10, caractérisé en ce qu'un dispositif pour le blocage du dispositif sommateur (120, 150, 152) pendant la phase de court-circuit du cycle de soudure est prévu.

12. Dispositif selon l'une des revendications 1 à 11, caractérisé en ce que les cycles de soudure ont une durée de cycle essentiellement constante et que l'installation d'alimentation en courant (PS) comporte un dispositif destiné à fournir une série d'impulsions de courant d'entrée à travers l'électrode (10) et la pièce à souder (12) avec une fréquence d'impulsion (P) qui est nettement plus élevée que la fréquence des cycles de soudure, et en ce qu'un dispositif régulateur de durée d'impulsion (32) est prévu pour régler le flux de courant entre le fil à souder (10) et la pièce à souder (12) pendant le cycle de soudure.

13. Dispositif selon la revendication 12, caractérisé en ce que ladite fréquence d'impulsion (P) est supérieure à 10 kHz, et se situe de préférence à 20 kHz.

14. Dispositif selon l'une des revendications 1 à 13, caractérisé en ce qu'un dispositif de commutation (40) destiné à soumettre l'électrode (10) et la pièce à souder (12) auxdites impulsions de courant d'entrée (P), et un circuit dérivé (44) à haute impédance, parallèle au dispositif de commande, sont prévus, ce dernier servant à ouvrir le dispositif de commutation (40) pendant la phase de court-circuit immédiatement avant que la sphère en métal fondu soit séparée et l'arc électrique amorcé.

15. Procédé pour la soudure à l'arc électrique par court-circuit utilisant un seul dispositif d'alimentation en courant continu, qui fournit à la pièce à souder un courant de soudure à intensité de courant variable dans le circuit de soudure d'un fil à souder disposé avec une saillie d'électrode variable sur un support et un bain de soudure, le courant de soudure étant dépendant d'une tension d'arc électrique et le fil à souder étant soumis à une suite de cycles de soudure, qui comportent une phase d'arc, dans laquelle l'énergie amenée au fil à souder fait fondre l'extrémité du fil à souder en une sphère en métal fondu, et qui comportent une phase de court-circuit, lors de laquelle la sphère en métal fondu entre en contact avec le bain de soudure et est séparée, caractérisé en ce que le fil à souder est alimenté pendant la phase d'arc de chacun des cycles de soudure avec une énergie présélectionnée (E_{R}), qui dépasse la valeur d'énergie nécessaire à la fusion de l'extrémité (N) du fil à souder.

16. Procédé selon la revendication 15, caractérisé par les caractéristiques suivantes:
a) Production d'une impulsion de courant (100, 110) à l'amorçage de la phase d'arc, qui comporte une partie d'impulsion supplémentaire à plasma (100) se produisant en premier, avec un premier niveau d'intensité de courant élevé (104), et une partie d'impulsion de courant à plasma (110) qui y succède, avec un deuxième niveau d'intensité de courant;
b) Sommation de l'énergie amenée au fil à souder (10) pendant l'impulsion de courant (100, 110) dans le cycle de soudure;
c) Délimitation de la partie d'impulsion à plasma (110) à un moment (T₅+ΔT), où l'énergie sommée (E_{T}) atteint une valeur prédéfinie (E_{R}), laquelle est supérieur à la valeur d'énergie qui est nécessaire à la fusion de l'extrémité (N) du fil à souder.
d) Amenée d'un courant de base (IB) à niveau d'intensité de courant faible à travers le fil à souder et la pièce à souder, jusqu'à ce que la phase de court-circuit suivante du cycle de soudure commence.

17. Procédé selon la revendication 15 ou 16, caractérisé en ce qu'un signal de puissance (130) est produit pour la sommation de l'énergie, qui est le produit instantané de la tension dans l'arc électrique (122) et du courant de soudure (124), et en ce que le signal de puissance est intégré au moins pour la durée (T₃ - T₅) de l'impulsion de courant (100, 110), pour obtenir un signal (164) qui contient une information sur l'énergie amenée au fil à souder (10) pendant la durée de ladite impulsion de courant (100, 110).

18. Procédé selon l'une des revendications 15 à 17, caractérisé en ce qu'on règle le premier niveau de courant (104), pour maintenir le signal de puissance (130) constant pendant la première partie d'impulsion (100).

19. Procédé selon la revendication 18, caractérisé en ce que ledit réglage du niveau de courant (104) est effectué au moyen d'un circuit modulateur de durée d'impulsion (30, 32), la durée d'impulsion de ce circuit étant modifiée en fonction des écarts entre le signal de puissance (130) et la valeur constante.
